# EUROPÄISCHE PATENTSCHRIFT

(11) **EP 2 942 336 B1**
(45) Veröffentlichungstag und Bekanntmachung des Hinweises auf die Patenterteilung: **03.05.2017**
(21) Anmeldenummer: 14167354.1
(22) Anmeldetag: 07.05.2014
(51) Int. Cl.: C04B 28/26, C04B 41/50, C04B 111/00, C04B 111/10

(54) **Wasserglas-Kleber**
Water glass adhesive
Adhésif à base de silicate de potassium

(43) Veröffentlichungstag der Anmeldung: 11.11.2015
(73) Patentinhaber: STO SE & Co. KGaA, 79780 Stühlingen (DE)
(72) Erfinder: Schaller, Christian, 73765 Neuhausen (DE); Weier, Andreas, 78647 Trossingen (DE); Henne, Franz-Josef, 78647 Trossingen (DE); Isabo, Carmen, 79761 Waldshut-Tiengen (DE); Egle, Gabriele, 78176 Blumberg (DE); Kämpfner, Hans, 79848 Bonndorf (DE)
(74) Vertreter: Gottschalk, Matthias

(56) Entgegenhaltungen:
- WO-A1-98/50478
- AU-B2- 747 164
- JP-A- S6 270 468
- US-A- 3 133 890
- US-A- 3 247 040
- US-A- 4 101 359
- XIAOMEI LIU ET AL: "PVA wood adhesive modified with sodium silicate cross-linked copolymer", BIOBASE MATERIAL SCIENCE AND ENGINEERING (BMSE), 2012 INTERNATIONAL CONFERENCE ON, IEEE, 21. Oktober 2012 (2012-10-21), Seiten 108-111, XP032334999, DOI: 10.1109/BMSE.2012.6466192 ISBN: 978-1-4673-2382-6

## Beschreibung

Die vorliegende Erfindung beschreibt eine Zusammensetzung zur Behandlung von Oberflächen, insbesondere einen Kleber, z.B. geeignet zur Befestigung von Glas- und Cellulosevliesen auf Untergründen im Innenraumbereich. Die Zusammensetzung ist insbesondere geeignet zur Behandlung von gipsbehandelten oder gipshaltigen Oberflächen.

Die Verspachtelung von Fugen benachbarter Gipsplatten wird im Trockenbau seit geraumer Zeit eingesetzt. Üblicherweise werden Gips- oder gipshaltige Produkte zur Verspachtelung eingesetzt. Die hierbei erhaltene glatte Oberfläche kann danach mit einem Anstrich, wie z.B. einer Grundierung, einer Farbe oder einem Putz versehen werden. Tapeten oder Vliese können ebenfalls auf derartige Oberflächen mittels eines Klebers aufgebracht werden.

Jedoch kommt es hier häufig zu Blasenbildungen und Kräuselungen an der Oberfläche, für die als mögliche Ursachen eine unvollständige Umsetzung des Calciumsulfathemihydrats zum Calciumsulfatdoppelhydrats und/oder die Anwesenheit von Carboxymethylcellulosen angenommen werden. Jedoch treten die oben genannten Probleme auch bei Carboxymethylcellulosefreien Systemen auf.

Folglich lag der vorliegenden Erfindung die Aufgabe zugrunde eine Zusammensetzung zur Verfügung zu stellen, die eine gute Haftung, insbesondere auf Gips oder gipshaltigen Oberflächen, ermöglicht. Insbesondere die Haftung von Glas- und Cellulosevliesen auf Gips oder gipshaltigen Oberflächen soll verbessert werden. Zudem sollte gleichzeitig der Kleber gut verarbeitbar sein, beispielsweise eine geringe bzw. keine Tropfneigung zeigen und sich einfach auftragen lassen.

AU 1997 42787 beschreibt einen pulverförmigen Klebstoff welcher ein re-dispergierbares Polymerpulver enthält, welches wiederum auf einem Polymer basiert, welches in Gegenwart eines Schutzkolloides erhältlich ist und dessen Verwendung in Klebstoffformulierungen.

US 4 101 359 beschreibt ein hochabsorbierendes mehrlagiges Tuch, welches normalerweise im Haushalt als Einwegtuch verwendet wird, welches schnell und einfach zu einer stabilen und ansprechenden farbigen Wandbeschichtung umgewandelt wird.

Es wurde nun gefunden, dass die oben genannte Aufgabe durch eine Kombination aus Stärke/Stärke-Derivaten und Wasserglas gelöst werden kann.

Die vorliegende Erfindung stellt daher eine wässrige Zusammensetzung zur Behandlung von Oberflächen zur Verfügung, insbesondere einen Kleber, bestehend aus der wässrigen Zusammensetzung, die Zusammensetzung enthaltend jeweils bezogen auf das Gesamtgewicht der Zusammensetzung
- mindestens 50 Gew.% Wasser;
- 0,1 bis 4,0 Gew. % Wasserglas;
- 0,1 bis 7,0 Gew.% Gesamtmenge an Stärke und/oder Stärke-Derivaten;
- 0 bis 15 Gew.% Füllstoffe;
- Polymerbindemittel ausgewählt aus Acrylat-, Styrol-, Vinylacetat-, Vinylpropionat- und/oder Urethanhomo- oder copolymer oder eine beliebige Mischung hiervon,
wobei sich die Mengenangaben von Wasserglas, Stärke und/oder Stärke-Derivaten und den Füllstoffen auf den in der wässrigen Zusammensetzung enthaltenen Feststoff der jeweiligen Substanz bezieht.

Die erfindungsgemäße Zusammensetzung verbessert die Haftung auf den behandelten Oberflächen, insbesondere die Haftung von Glas- und Cellulosevliesen auf Gips oder gipshaltigen Oberflächen. Durch die Kombination aus Stärke/Stärke-Derivaten und Wasserglas lässt sich die Zusammensetzung darüber hinaus auch tropfgehemmt verarbeiten also sauber und ohne Verluste applizieren. Außerdem kann je nach Menge an Wasserglas und Stärke/Stärke-Derivaten die Zeit bis der Kleber abbindet eingestellt werden, so dass auch große Oberflächen behandelt werden können ohne dass es zu einem frühzeitigen ungewollten Abbinden kommt. Die wässrige Zusammensetzung gemäß der vorliegenden Erfindung kann auf die üblichen Arten und Weisen aufgetragen werden, z.B. mittels Streichen, Rollenauftrag, eines Tapeziergerätes oder im Spritzverfahren.

Die Menge an festem Polymerbindemittel bezogen auf die Gesamtmenge der wässrigen Zusammensetzung beträgt vorzugsweise 2,0 bis 15 Gew.%, stärker bevorzugt sind 3,0 bis 12 Gew. % noch stärker bevorzugt sind 4,0 bis 10 Gew.%.

Als Polymerbindemittel werden Acrylat-, Styrol-, insbesondere Styrolacrylat-, Vinylacetat-, Vinylpropionat- und/oder Urethanhomo- und/oder -copolymeren oder einer beliebigen Mischung hiervon verwendet. Als Polyvinylacetate sind Copolymerisate, beispielsweise mit Vinylestern, Maleinaten, Fumaraten, Acrylaten oder Ethylen, oder Terpolymerisate mit Ethylen und Vinylchlorid bevorzugt. Geeignete Polyvinylpropionatdispersionen nutzen Polyvinylpropionat z.B. als Homopolymerisat oder als Copolymerisat, beispielsweise mit Acrylaten. In geeigneten Polystyroldispersionen liegt Polystyrol z.B. als Homopolymerisat oder als Copolymerisat vor. Bevorzugte Styrolcopolymerisate sind, z.B. solche mit Acrylaten oder Butadien. Besonders bevorzugt sind Vinylacetat-ethylen-copolymere als Polymerbindemittel.

Das Polymerbindemittel wird üblicherweise als wässrige Dispersion enthaltend 30 bis 75 Gew.% Wasser, insbesondere enthaltend 40 bis 60 Gew.% Wasser eingesetzt. Handelsübliche Polymerbindemitteldispersionen enthalten üblicherweise ca. 50 Gew.-% Wasser.

Die Menge an festem Wasserglas bezogen auf die wässrige Zusammensetzung beträgt vorzugsweise 0,1 bis 2,0 Gew.%, stärker bevorzugt sind 0,2 bis 1,0 Gew. %.

Als Wasserglas wird üblicherweise in Wasser lösliches Wasserglas oder eine Lösung von Wasserglas eingesetzt. Vorzugsweise wird Lithium-, Natrium-, Kaliumwasserglas oder Mischungen hiervon eingesetzt.

Durch das Wasserglas wird zudem der pH-Wert der wässrigen Zusammensetzung derart erhöht, dass auf Konservierungsmittel normalerweise verzichtet werden kann.

Daher ist die wässrige Zusammensetzung der vorliegenden Erfindung vorzugsweise frei von Konservierungsmitteln.

Durch die Stärke und/oder Stärke-Derivate wird sowohl die Klebkraftwirkung als auch das Wasserrückhaltevermögen verstärkt. Zudem kann die Zeit in der der Kleber noch verarbeitbar ist gesteuert werden, so dass große Oberflächen behandelt werden können. Somit sind mittels des Klebers ggf. angebrachte Glas- oder Cellulosevliese noch auf der Oberfläche verschiebbar.

Die Gesamtmenge an Stärke und/oder Stärke-Derivaten bezogen auf die wässrige Zusammensetzung beträgt vorzugsweise 0,2 bis 5,0 Gew.%, noch bevorzugter sind 0,5 bis 4,0 Gew.%.

In der vorliegenden Anmeldung werden die Begriffe "Stärke-Derivate" und "modifizierte Stärke" synonym verwendet.

Vorzugsweise wird die Stärke und/oder Stärke-Derivate aus Stärke-Derivaten ausgewählt, noch bevorzugter aus modifizierter Maisstärke, modifizierter Kartoffelstärke oder Mischungen hiervon ausgewählt.

Vorzugsweise werden die Stärke-Derivate aus Stärke-Ethern ausgewählt.

Stärke- Derivate und Stärke-Ether sind beispielsweise in Römpp, Chemielexikon, 9. Auflage, Georg Thieme Verlag beschrieben.

Beispiele für Stärke-Ether sind Ether mit einwertigen Alkoholen, Carboyalkylstärkeether, Hydroxyalkylstärkeether und kationische Stärken.

Insbesondere bevorzugt werden die Stärke-Derivate aus Stärke-Ethern von Maisstärke, Kartoffelstärke oder Mischungen hiervon ausgewählt.

Die wässrige Zusammensetzung der vorliegenden Erfindung kann optional 0 bis 15 Gew.% Füllstoffe enthalten. Falls Füllstoffe vorhanden sind beträgt deren Menge vorzugsweise 1,0 bis 15 Gew.% bezogen auf die Gesamtmasse der wässrigen Zusammensetzung, bevorzugter sind 2,0 bis 10 Gew.%, noch bevorzugter sind 2,5 bis 8,0 Gew.%.

Als Füllstoffe können alle üblichen Füllstoffe eingesetzt werden. Vorzugsweise werden ein oder mehrere silikatische Füllstoffe eingesetzt. Als silikatischen Füllstoffe werden vorzugsweise Schichtsilikate und/oder Füllstoffe mit einer Mohs-Härte von 3,0 oder weniger, vorzugsweise 2,5 oder weniger, noch bevorzugter 2,0 oder weniger eingesetzt.

Die spezifische Dichte der Füllstoffe beträgt vorzugsweise unter 3,0 g/cm³, noch bevorzugter unter 2,8 g/m³.

Schichtsilikate können beispielsweise eingesetzt werden um das Wasserrückhaltevermögen weiter zu erhöhen.

Die Menge an Wasser bezogen auf die wässrige Zusammensetzung beträgt vorzugsweise 60 Gew.% oder mehr, stärker bevorzugt sind 70 Gew.% oder mehr und noch stärker bevorzugt sind 80 Gew.% oder mehr. Üblicherweise beträgt die Gesamtmenge an Wasser nicht mehr als 90 Gew.%.

Die wässrige Zusammensetzung kann des Weiteren bis zu 5,0 Gew.%, vorzugsweise 0,1 bis 2,0 Gew.%, stärker bevorzugt 0,1 bis 1,0 Gew.% an üblichen Additiven, z.B.

Dispergiermitteln, Verdickern, Netzmittel, Entschäumern, etc., enthalten. Die Mengenangaben der Additive bezieht sich auf den in der wässrigen Zusammensetzung enthaltene Menge der jeweiligen Substanz.

Die wässrige Zusammensetzung ist normalerweise frei von Weichmachern, organischen Lösemitteln und/oder fogging-aktiven Substanzen sowie frei von Bioziden (Konservierungmitteln). Dadurch ist die Emission von flüchtigen organischen Verbindungen (volatile organic compounds, VOCs) sehr gering bzw. nicht vorhanden. Vorzugsweise ist die wässrige Zusammensetzung frei von Weichmachern, organischen Lösemitteln und fogging-aktiven Substanzen sowie frei von Bioziden (Konservierungsmitteln).

Vorzugsweise ist die wässrige Zusammensetzung frei von Pigmenten, stärker bevorzugt frei von Pigmenten und Farbstoffen.

Die wässrige Zusammensetzung ist vorzugsweise frei von Carboxy-methylcellulose, noch bevorzugter frei von Cellulose.

In einer bevorzugten Ausführungsform besteht die wässrige Zusammensetzung der vorliegenden Erfindung aus
- 0,1 bis 4,0 Gew. % Wasserglas;
- 0,1 bis 7,0 Gew.% Gesamtmenge an Stärke und/oder Stärke-Derivaten;
- 0 bis 15 Gew.% Füllstoffen;
- 2,0 bis 15 Gew.% Polymerbindemittel ausgewählt aus Acrylat-, Styrol-, Vinylacetat-, Vinylpropionat- und/oder Urethanhomo- oder copolymer oder eine beliebige Mischung hiervon,
- bis zu 5,0 Gew.% an üblichen Additiven
- Rest Wasser
wobei sich die Mengenangaben von Wasserglas, Stärke und/oder Stärke-Derivaten und den Füllstoffen auf den in der wässrigen Zusammensetzung enthaltenen Feststoff der jeweiligen Substanz bezieht und die Mengenangaben der Additive sich auf die in der wässrigen Zusammensetzung enthaltene Menge der jeweiligen Substanz bezieht.

Die bevorzugten Merkmale der wässrigen Zusammensetzung der vorliegenden Erfindung sind auch bevorzugte Merkmale der bevorzugten Ausführungsform der wässrigen Zusammensetzung der vorliegenden Erfindung.

Die Erfindung ist weiterhin gerichtet auf die Verwendung der wässrigen Zusammensetzung gemäß der vorliegenden Erfindung als Kleber auf Oberflächen, insbesondere Gips oder gipshaltiger Oberflächen.

Vorzugsweise wird die wässrige Zusammensetzung gemäß der vorliegenden Erfindung als Kleber für Glas- und Cellulosevliese auf Oberflächen, insbesondere Gips oder gipshaltigen Oberflächen verwendet.

Die bevorzugten Merkmale der wässrigen Zusammensetzung der vorliegenden Erfindung einschließlich der bevorzugten Ausführungsform der wässrigen Zusammensetzung sind auch bevorzugte Merkmale der Verwendung der vorliegenden Erfindung.

### Experimenteller Teil

Die Härte und Dichte der Füllstoffe sind den Herstellerangaben entnommen.

### Beispiele:

Es wurden die folgenden Zusammensetzungen hergestellt. Das Vergleichsbeispiel unterscheidet sich vom erfindungsgemäßen Beispiel dadurch, dass kein Wasserglas enthalten ist und der Anteil an Wasserglas durch Wasser ersetzt wurde.

| | Erfindungsgemäß | Vergleichsbeispiel |
|---|---|---|
| | Menge [Gew.%] | Menge [Gew.%] |
| Wasser | 75,5 | 77,5 |
| Additive (Netzmittel, Entschäumer, etc) | 0,5 | 0,5 |
| Wasserglas (ca. 30% Feststoffanteil) | 2 | 0 |
| silikatischer Weichfüllstoff | 5 | 5 |
| Stärke-Ether | 3 | 3 |
| Polymerdispersion (50% Feststoffanteil) | 14 | 14 |
| Gesamt | 100 | 100 |

Die erfindungsgemäße Zusammensetzung zeigte nach Eintauchen und Herausziehen des Werkzeuges, z.B. Pinsel, Bürste, Rolle, etc., eine geringe bis nicht vorhandene Tropfneigung wohingegen die Zusammensetzung gemäß dem Vergleichsbeispiel deutliches Tropfverhalten zeigte. Zudem zeigt die Zusammensetzung gemäß Vergleichsbeispiel einen sehr geringen Roll- bzw. Streichwiderstand, beim Auftragen mittels Rolle war beispielsweise ein gleichmäßiges Abrollen nicht gewährleistet, die Rolle "rutschte durch".

## Patentansprüche

1. Ein Kleber, bestehend aus einer wässrigen Zusammensetzung, zur Behandlung von Oberflächen, die wässrige Zusammensetzung enthaltend
- mindestens 50 Gew.% Wasser;
- 0,1 bis 4,0 Gew. % Wasserglas;
- 0,1 bis 7,0 Gew.% Gesamtmenge an Stärke und/oder Stärke-Derivaten;
- 0 bis 15 Gew.% Füllstoffe;
- Polymerbindemittel ausgewählt aus Acrylat-, Styrol-, Vinylacetat-, Vinylpropionat- und/oder Urethanhomo- oder copolymer oder eine beliebige Mischung hiervon,
wobei sich die Mengenangaben von Wasserglas, Stärke und/oder Stärke-Derivaten und den Füllstoffen auf den in der wässrigen Zusammensetzung enthaltenen Feststoff der jeweiligen Substanz bezieht.

2. Der Kleber gemäß Anspruch 1, wobei die Menge an festem Polymerbindemittel bezogen auf die Gesamtmenge der wässrigen Zusammensetzung 2,0 bis 15 Gew.% beträgt.

3. Der Kleber gemäß einem der vorangegangenen Ansprüche, wobei die Zusammensetzung frei von Konservierungsmitteln ist.

4. Der Kleber gemäß einem der vorangegangenen Ansprüche, wobei die Stärke und/oder Stärke-Derivate aus Stärke-Derivaten ausgewählt sind.

5. Der Kleber gemäß einem der vorangegangenen Ansprüche, wobei die Stärke-Derivate aus modifizierter Maisstärke, modifizierter Kartoffelstärke oder Mischungen hiervon ausgewählt ist.

6. Der Kleber gemäß einem der vorangegangenen Ansprüche, wobei die Stärke-Derivate aus Stärke-Ethern ausgewählt ist.

7. Der Kleber gemäß einem der vorangegangenen Ansprüche, wobei die Füllstoffe ein oder mehrere silikatische Füllstoffe sind.

8. Der Kleber gemäß Anspruch 7, wobei die ein oder mehrere silikatische Füllstoffe Schichtsilikate und/oder Füllstoffe mit einer Mohs-Härte von 3,0 oder weniger sind.

9. Der Kleber gemäß einem der vorangegangenen Ansprüche, wobei die Zusammensetzung bis zu 5,0 Gew.%, an üblichen Additiven, z.B. Dispergiermitteln, Verdickern, Netzmittel, Entschäumern, etc., enthält.

10. Der Kleber gemäß einem der vorangegangenen Ansprüche, wobei die Zusammensetzung frei von Weichmachern, organischen Lösemitteln und/oder fogging-aktiven Substanzen sowie frei von Bioziden ist.

11. Der Kleber gemäß einem der vorangegangenen Ansprüche, wobei die Zusammensetzung frei von Carboxymethylcellulose ist.

12. Verwendung des Klebers gemäß einem der vorangegangenen Ansprüche als Kleber auf Oberflächen, insbesondere Gips oder gipshaltiger Oberflächen.

13. Verwendung gemäß Anspruch 12 als Kleber für Glas- und Cellulosevliese auf Oberflächen, insbesondere Gips oder gipshaltigen Oberflächen.

## Claims

1. An adhesive, consisting of an aqueous composition, for the treatment of surfaces, the aqueous composition containing
- at least 50 % by weight water;
- 0.1 to 4.0 % by weight water glass;
- 0.1 to 7.0 % by weight total amount of starch and/or starch derivatives;
- 0 to 15 % by weight fillers;
- polymer binder selected from acrylate, styrene, vinyl acetate, vinyl propionate and/or urethane homo- or copolymer or any mixture hereof,
wherein the specified amounts of water glass, starch and/or starch derivatives and the fillers relate to the solids content of the respective substances in the aqueous composition.

2. The adhesive according to claim 1, wherein the amount of solid polymer binder is 2.0 to 15 % by weight in relation to the total amount of the aqueous composition.

3. The adhesive according to any one of the preceding claims, wherein the composition is free from preservatives.

4. The adhesive according to any one of the preceding claims, wherein the starch and/or starch derivative are/is selected from starch derivatives.

5. The adhesive according to any one of the preceding claims, wherein the starch derivative is selected from modified corn starch, modified potato starch, or mixtures hereof.

6. The adhesive according to any one of the preceding claims, wherein the starch derivative is selected from starch ethers.

7. The adhesive according to any one of the preceding claims, wherein the fillers are one or more siliceous fillers.

8. The adhesive according to claim 7, wherein the one or more siliceous fillers are phyllosilicates and/or fillers having a Mohs hardness of 3.0 or less.

9. The adhesive according to any one of the preceding claims, wherein the composition contains up to 50 % by weight of conventional additives, for example dispersing agents, thickeners, wetting agents, anti-foaming agents, etc.

10. The adhesive according to any one of the preceding claims, wherein the composition is free from plasticisers, organic solvents and/or fogging-active substances and is also free from biocides.

11. The adhesive according to any one of the preceding claims, wherein the composition is free from carboxymethyl cellulose.

12. Use of the adhesive according to any one of the preceding claims as an adhesive on surfaces, in particular gypsum or gypsum-containing surfaces.

13. The use according to claim 12 as an adhesive for glass and cellulose mats on surfaces, in particular gypsum or gypsum-containing surfaces.

## Revendications

1. Colle, constituée d'une composition aqueuse, pour traiter des surfaces, ladite composition aqueuse contenant
- au moins 50 % en poids d'eau ;
- 0,1 à 4,0 % en poids de verre liquide ;
- 0,1 à 7,0 % en poids, par rapport à la quantité totale, d'amidon et/ou de dérivés d'amidon ;
- 0 à 15 % en poids de charges ;
- des liants polymères choisis parmi les homo- et copolymères d'acrylate, de styrène, d'acétate de vinyle, de propionate de vinyle et/ou d'uréthane ou parmi un quelconque mélange de ceux-ci,
les quantités pour le verre liquide, l'amidon et/ou les dérivés d'amidon ainsi que pour les charges étant indiquées par rapport à la matière sèche de la substance concernée telle qu'elle est contenue dans ladite composition aqueuse.

2. Colle selon la revendication 1, la quantité de liant polymère solide étant comprise entre 2,0 et 15 % en poids, par rapport à la quantité totale de la composition aqueuse.

3. Colle selon l'une des revendications précédentes, ladite composition étant exempte de conservateurs.

4. Colle selon l'une des revendications précédentes, ledit amidon et/ou lesdits dérivés d'amidon étant choisis parmi les dérivés d'amidon.

5. Colle selon l'une des revendications précédentes, lesdits dérivés d'amidon étant choisis parmi l'amidon de maïs modifié, l'amidon de pomme de terre modifié ou les mélanges de ceux-ci.

6. Colle selon l'une des revendications précédentes, lesdits dérivés d'amidon étant choisis parmi les éthers d'amidon.

7. Colle selon l'une des revendications précédentes, lesdites charges étant une ou plusieurs charges de type silicate.

8. Colle selon la revendication 7, lesdites une ou plusieurs charges de type silicate étant des phyllosilicates et/ou des charges ayant une dureté de Mohs inférieure ou égale à 3,0.

9. Colle selon l'une des revendications précédentes, ladite composition contenant jusqu'à 5,0 % en poids d'additifs usuels comme, par exemple, d'agents dispersants, d'agents épaississants, d'agents mouillants, d'agents anti-mousse, etc.

10. Colle selon l'une des revendications précédentes, ladite composition étant exempte de plastifiants, de solvants organiques et/ou de substances agissant sur l'embuage et étant exempte de biocides.

11. Colle selon l'une des revendications précédentes, ladite composition étant exempte de carboxyméthylcellulose.

12. Utilisation de la colle selon l'une des revendications précédentes en tant que colle sur des surfaces, notamment sur du gypse ou des surfaces contenant du gypse.

13. Utilisation selon la revendication 12 en tant que colle destinée à des non-tissés en verre et en cellulose, sur des surfaces, notamment sur du gypse ou des surfaces contenant du gypse.
